(19)

**Europäisches Patentamt**
**European Patent Office**
**Office européen des brevets**

(11) **EP 1 920 002 B1**

(12) **EUROPEAN PATENT SPECIFICATION**

(45) Date of publication and mention
of the grant of the patent:
**09.11.2011 Bulletin 2011/45**

(51) Int Cl.:
**C08L 23/10** (2006.01)    **B29C 47/00** (2006.01)

(21) Application number: **06813420.4**

(22) Date of filing: **11.08.2006**

(86) International application number:
**PCT/US2006/031669**

(87) International publication number:
**WO 2007/024541 (01.03.2007 Gazette 2007/09)**

(54) **IMPROVED APPEARANCE PROPYLENE POLYMER COMPOSITION**

PROPYLEN-POLYMER-ZUSAMMENSETZUNG MIT VERBESSERTEM AUSSEHEN

COMPOSITION DE POLYMERE DE PROPYLENE PRESENTANT UN ASPECT AMELIORE

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.08.2005 US 709711 P**

(43) Date of publication of application:
**14.05.2008 Bulletin 2008/20**

(73) Proprietor: **Styron Europe GmbH**
**8810 Horgen (CH)**

(72) Inventors:
• **BALLOT, Michael**
  **B-7711 Dottenijs (BE)**

• **RABAIN, Frederic**
  **NL-4532 KL Terneuzen (NL)**
• **KRABBENBORG, Franciscus, J., T.**
  **NL-4535 GC Terneuzen (NL)**
• **MEDLIN, David**
  **NL-4532 HR Terneuzen (NL)**

(74) Representative: **Klusmann, Peter et al**
**Hoffmann - Eitle**
**Patent- und Rechtsanwälte**
**Arabellastrasse 4**
**81925 München (DE)**

(56) References cited:
**WO-A2-02/22731**         **US-A1- 2003 069 362**
**US-A1- 2004 013 870**    **US-B1- 6 403 692**

EP 1 920 002 B1

**Description**

FIELD OF THE INVENTION

This invention relates to propylene polymer compositions comprising a propylene polymer, a polyolefin elastomer and a fluoropolymer and fabricated articles therefrom which demonstrate reduced surface imperfections, such as flow marks.

BACKGROUND OF THE INVENTION

Propylene polymers have been used in many applications in the form of molded articles, film, sheet, etc., because it is excellent in molding processability, toughness, moisture resistance, gasoline resistance, chemical resistance, has a low specific gravity, and is inexpensive. The use of propylene polymers is expanding at an increasing rate in the fields of exterior and interior automotive trims, in electrical and electrical equipment device housing and covers as well as other household and personal articles.

However, articles molded from polypropylene are known to exhibit surface imperfections, such as flow marks and silver streaks. Silver streaks are generally associated with an overheating phenomenon while flow mark imperfections appear to be associated with the viscosity, or flowability, of the resin.

Flow marks manifest on the surface of injected molded articles as a series of alternating high and low gloss bands or stripes, sometimes giving rise to the term tiger striping. The general trend of each band is approximately perpendicular to the direction of melt flow during injection. These marks do not perceivably affect mechanical properties of the molded article, nor are they discernible by touch. However, their presence is aesthetically unacceptable and often results in unacceptably high quality control reject rate because of the appearance of inhomogeneity within molded parts. The effect is pronounced in large molded articles with a high aspect ratio, such as automobile parts, for example, instrument panels and bumper fascia.

The art has attempted to improve surface appearance properties in molded articles by decreasing the viscosity of the propylene polymer resin. This technique decreased the appearance of the flow marks, however the decrease in viscosity may detrimentally effect other physical properties such as impact strength. Flow marks may also be decreased by annealing the article after the molding process. This annealing step however is not commercially feasible or desirable in view of the increased energy required to anneal the article, extended time to anneal, and equipment modification necessary to allow injection-molding apparati to also serve as annealing mediums. The art has also described adding low viscosity rubber components to polypropylene to improve the appearance of the resultant injection-molded articles, see United States Patent (USP) 5,468,808.

There exists a need to reduce the flow marks or gloss in articles produced from propylene polymer compositions without compromising other physical properties, in particularly, impact strength.

SUMMARY OF THE INVENTION

The present invention is such a desirable propylene polymer composition. The composition possesses a desirable balance of improved flow marks and/or gloss with a good balance of stiffness and impact strength which demonstrates improved surface appearance in injection molded articles.

In one aspect of the present invention, there is provided a propylene polymer composition comprising (a) from about 40 to about 95 parts of a propylene polymer wherein the propylene polymer is a homopolymer of propylene, a copolymer of propylene and a $C_2$ or $C_4$ to $C_{20}$ alpha-olefin, or mixtures thereof; (b) from about 1 to about 20 parts by weight of a polyolefin elastomer wherein the polyolefin elastomer is a substantially linear ethylene polymer, a linear ethylene polymer or combinations thereof, wherein the substantially linear ethylene polymer and linear ethylene polymer are characterized as having: (i) a density of less than about 0.93 g/cm$^3$, (ii) a molecular weight distribution, $M_w/M_n$, of less than about 3.0, and (iii) a Composition Distribution Branch Index of greater than 30 percent; (c) from about 0.01 to about 5 parts by weight of a fibril forming fluoropolymer, and (d) from 0 to about 25 parts of a filler, wherein parts are parts by weight based on the total weight of the propylene polymer composition. The substantially linear ethylene polymer or linear ethylene polymer is preferably a copolymer of ethylene with propylene, 1-butene, 1-hexene, 4-methyl-1-pentene or 1-octene; the fluoropolymer is preferably a fibril forming PTFE; and the filler is preferably talc, wollastonite, clay, single layers of a cation exchanging layered silicate material or mixtures thereof.

In a further embodiment of the present invention, the propylene polymer composition further comprises (e) an additional polymer selected from low density polyethylene, linear low density polyethylene, high density polyethylene, polystyrene, polycyclohexylethane, polyester, ethylene/styrene interpolymer, syndiotactic polypropylene, syndiotactic polystyrene, ethylene/propylene copolymer, ethylene/propylene/diene terpolymer, or mixtures thereof In a further embodiment of the present invention, the propylene polymer composition further comprises a slip agent such as erucamide, oleamide, linoleamide, or steramide, an UV stabilizer, pigment(s), or combinations thereof.

Another aspect of the present invention is a method for preparing the propylene polymer composition comprising the step of combining (a) from about 40 to about 95 parts of a propylene polymer wherein the propylene polymer is a homopolymer of propylene, a copolymer of propylene and a C2 or C4 to C20 alpha-olefin, or mixtures thereof; (b) from about 1 to about 20 parts by weight of a polyolefin elastomer wherein the polyolefin elastomer is a substantially linear ethylene polymer, a linear ethylene polymer or combinations thereof, wherein the substantially linear ethylene polymer and linear ethylene polymer are characterized as having: (i) a density of less than about 0.93 g/cm3, (ii) a molecular weight distribution, Mw/Mn, of less than about 3.0, and (iii) a Composition Distribution Branch Index of greater than 30 percent; (c) from about 0.01 to about 5 parts by weight of a fibril forming fluoropolymer, and (d) from 0 to 25 parts of a filler, wherein parts are parts by weight based on the total weight of the propylene polymer composition.

Another embodiment of the present invention is a method to produce a molded or extruded article comprising the steps of (A) preparing a propylene polymer composition comprising: (a) from about 40 to about 95 parts of a propylene polymer wherein the propylene polymer is a homopolymer of propylene, a copolymer of propylene and a $C_2$ or $C_4$ to $C_{20}$ alpha-olefin, or mixtures thereof; (b) from about 1 to about 20 parts by weight of a polyolefin elastomer wherein the polyolefin elastomer is a substantially linear ethylene polymer, a linear ethylene polymer or combinations thereof, wherein the substantially linear ethylene polymer and linear ethylene polymer are characterized as having: (i) a density of less than about 0.93 g/cm$^3$, (ii) a molecular weight distribution, $M_w/M_n$, of less than about 3.0, and (iii) a Composition Distribution Branch Index of greater than 30 percent; (c) from about 0.01 to about 5 parts by weight of a fibril forming fluoropolymer, and (d) from 0 to 25 parts of a filler, wherein parts are parts by weight based on the total weight of the propylene polymer composition and (B) molding or extruding said propylene polymer composition into a molded or an extruded article.

Another aspect of the present invention is the propylene polymer of the first aspect in the form of a molded or extruded article.

DETAILED DESCRIPTION OF THE EMBODIMENTS

Component (a) in the propylene polymer composition of the present invention is a propylene polymer, preferably a propylene polymer with a crystallinity equal to or greater than 30 percent. The propylene polymer suitable for use in this invention is well known in the literature and can be prepared by known techniques. In general, the propylene polymer is in the isotactic form, although other forms can also be used (for example, syndiotactic or atactic). The propylene polymer used for the present invention is a homopolymer of polypropylene or a copolymer, for example, a random or block copolymer, of propylene and a $C_2$ or $C_4$ to $C_{20}$ alpha- olefin. The alpha-olefin is present in the propylene copolymer of the present invention in an amount of not more than 20 percent by mole, preferably not more than 15 percent, even more preferably not more than 10 percent and most preferably not more than 5 percent by mole.

Examples of the $C_2$ and $C_4$ to $C_{20}$ alpha-olefins for constituting the propylene, and alpha-olefin copolymer include ethylene, 1-butene, 1-pentene, 1-hexene,1-heptene, 1-octene, 1-decene, 1-dodecene, 1-hexadodecene, 4-methyl-1-pentene, 2-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, dimethyloctene, ethyl-1-octene, methyl-1-nonene, vinylcyclopentene, vinylcyclohexene and vinylnorbomene, where alkyl branching position is not specified it is generally on position 3 or higher of the alkene.

The propylene polymer of the present invention can be prepared by various processes, for example, in a single stage or multiple stages, by such polymerization method as slurry polymerization, gas phase polymerization, bulk polymerization, solution polymerization or a combination thereof using a metallocene catalyst or a so-called Ziegler-Natta catalyst, which usually is one comprising a solid transition metal component comprising titanium. Particularly a catalyst consisting of, as a transition metal/solid component, a solid composition of titanium trichoride which contains as essentiat components titanium, magnesium and a halogen; as an organometalic component an organoaluminum compound; and if desired an electron donor. Preferred electron donors are organic compounds containing a nitrogen atom, a phosphorous atom, a sulfur atom, a silicon atom or a boron atom, and preferred are silicon compounds, ester compounds or ether compounds containing these atoms.

Polypropylene is commonly made by catalytically reacting propylene in a polymerization reactor with appropriate molecular weight control agents. Nucleating agent is added after the reaction is completed in order to promote crystal formation. The polymerization catalyst should have high activity and be capable of generating highly tactic polymer. The reactor system must be capable of removing the heat of polymerization from the reaction mass, so the temperature and pressure of the reaction can be controlled appropriately.

A good discussion of various polypropylene polymers is contained in Modern Plastics Encyclopedia/89, mid October 1988 Issue, Volume 65, Number 11, pp. 86-92, the entire disclosure of which is incorporated herein by reference. The molecular weight of the propylene polymer for use in the present invention is conveniently indicated using a melt flow measurement, sometimes referred to as melt flow rate (MFR) or melt index (MI), according to ASTM D 1238 at 230°C and an applied load of 2.16 kilogram (kg). Melt flow rate is inversely proportional to the molecular weight of the polymer. Thus, the higher the molecular weight, the lower the melt flow rate, although the relationship is not linear. The melt flow rate for the propylene polymer useful herein is generally greater than about 0.1 grams/10 minutes (g/10 min.), preferably greater than about 0.5 g/10 min., more preferably greater than about 1 g/10 min., and even more preferably greater than about 10 g/10 min. The melt flow rate for the propylene polymer useful herein is generally less than about 200 g/10 min., preferably less than about 100 g/10 min., more preferably less than about 75 g/10 min., and more preferably less than about 50 g/10 min.

The propylene polymer as component (a) may be characterized also by its crystalline structure.

One method to characterize crystallinity is by the pulse nuclear magnetic resonance (NMR) method of. Fujimoto, T. Nishi and R. Kado, Polymer Journal Volume 3, 448-462 (1972) wherein crystalline phase (I), intermediate phase (II) and amorphous (III) phase are determined. Preferably the weight ratio of the crystalline phase (I)/the intermediate phase (II) is greater than about 4, preferably greater than about 5, more preferably greater than about 8 and most preferably greater than about 10. The content of the amorphous phase (III) is from at least about 1, preferably from at least about 2, more preferably from at least about 5, even ore preferably from at least about 10 and most preferably from at least about 15 weight percent. The content of the amorphous phase (III) is less than about 40, preferably less than about 30, more preferably less than about 25, even more preferably less than 20 and most preferably less than about 15 percent by weight

Generally, in pulse NMR determinations, an energy pulse is applied to a spinning polymer sample at high resolution over a specified range of temperature at specific temperature intervals (temperature in degrees Kelvin, °K). The resulting energy is monitored in the time domain (microsecond time scale). The energy/time curve is a measure of the time needed for the polymer to return from the excited energy state back to its ground energy level. This is called the Free Induction Decay (FID) curve. The curve is then mathematically broken down into a fast Gaussian equation (usually associated with crystallinity), a slow Gaussian equation and one exponential equation. The last two equations are usually associated with the polymers amorphous phase and an intermediate phase that is between the crystallinity and amorphous properties, respectively. These equations are used to calculate coefficients that characterize the appropriate amplitude and time components of the FID curve. The coefficients are then placed in a matrix and undergo regression processes such as partial least squares. The crystalline, amorphous, and intermediate phases are calculated and reported as weight percents as a function of temperature, °K.

However, a more preferable method of determining crystallinity in the propylene polymer is by differential scanning calorimetry (DSC). A small sample (milligram size) of the propylene polymer is sealed into an aluminum DSC pan. The sample is placed into a DSC cell with a 25 centimeter per minute nitrogen purge and cooled to about -100°C. A standard thermal history is established for the sample by heating at 10°C per minute to 225°C. The sample is then cooled to about -100°C and reheated at 10°C per minute to 225°C. The observed heat of fusion ($\Delta H_{observed}$) for the second scan is recorded. The observed heat of fusion is related to the degree of crystallinity in weight percent based on the weight of the polypropylene sample by the following equation:

$$\text{Crystallinity, \%} = \frac{\Delta H_{observed}}{\Delta H_{isotactic\ PP}} \times 100$$

where the heat of fusion for isotactic polypropylene ($\Delta H_{isotactic\ pp}$), as reported in B. Wunderlich, Macromolecular Physics, Volume 3, Crystal Melting, Academic Press, New Your, 1980, p 48, is 165 Joules per gram (J/g) of polymer.

Preferably, the degree of crystallinity for the propylene polymer of the present invention, as determined by DSC, is at equal to or greater than about 30 weight percent, preferably equal to or greater than about 54 weight percent, more preferably equal to or greater than about 58 weight percent, even more preferably equal to or greater than about 64 weight percent and most preferably equal to or greater than about 68 weight percent based on the weight of the high crystalline propylene polymer. The degree of crystallinity for the propylene polymer of the present invention, as determined by DSC, is less than or equal to about 100 weight percent, preferably less than or equal to about 90 weight percent, more preferably less than or equal to about 80 weight percent, and most preferably less than or equal to about 75 weight percent based on the weight of the high crystalline propylene polymer.

Part, or all, of the propylene polymer of the present invention may be graft modified. A preferred graft modification of the polypropylene is achieved with any unsaturated organic compound containing, in addition to at least one ethylenic unsaturation (for example, at least one double bond), at least one carbonyl group (-C=O) and that will graft to a polypropylene as described above. Representative of unsaturated organic compounds that contain at least one carbonyl group are the carboxylic acids, anhydrides, esters and their salts, both metallic and nonmetallic. Preferably, the organic compound contains ethylenic unsaturation conjugated with a carbonyl group. Representative compounds include maleic, fumaric, acrylic, methacrylic, itaconic, crotonic, -methyl crotonic, and cinnamic acid and their anhydride, ester and salt derivatives, if any. Maleic anhydride is the preferred unsaturated organic compound containing at least one ethylenic unsaturation and at least one carbonyl group.

The unsaturated organic compound containing at least one carbonyl group can be grafted to the polypropylene by any known technique, such as those taught in USP 3,236,917 and USP 5,194,509. For example, polymer is introduced into a two-roll mixer and mixed at a temperature of 60°C. The unsaturated organic compound is then added along with a free radical initiator, such as, for example, benzoyl peroxide, and the components are mixed at 30°C until the grafting is completed. Alternatively, the reaction temperature is higher, for example, 210°C to 300°C, and a free radical initiator is not used or is used at a reduced concentration. An alternative and preferred method of grafting is taught in USP 4,905,541, the disclosure of which is incorporated herein by reference, by using a twin-screw devolatilizing extruder as the mixing apparatus. The polypropylene and unsaturated organic compound are mixed and reacted within the extruder at temperatures at which the reactors are molten and in the presence of a free radical initiator. Preferably, the unsaturated organic compound is injected into a zone maintained under pressure in the extruder.

The unsaturated organic compound content of the grafted polypropylene is at least about 0.01 weight percent, preferably at least about 0.1 weight percent, more preferably at least about 0.5 weight percent, and most preferably at least about 1 weight percent based on the combined weight of the polypropylene and organic compound. The maximum amount of unsaturated organic compound content can vary to convenience, but typically it does not exceed about 10 weight percent, preferably it does not exceed about 5 weight percent, more preferably it does not exceed about 2 weight percent and most preferably it does not exceed about 1 weight percent based on the combined weight of the polypropylene and the organic compound.

The propylene polymer or graft-modified propylene polymer is employed in the propylene polymer blend compositions of the present invention in amounts sufficient to provide the desired processability and good balance of stiffness and toughness. If present, the graft-modified propylene polymer can be employed in an amount equal-to 100 weight percent of the total weight of the propylene polymer, preferably in an amount up to or equal to 50 weight percent, more preferably up to or equal to 30 weight percent, even more preferably up to or equal to 20 weight percent and most preferably up to or equal to 10 weight percent of the weight of the propylene polymer. The propylene polymer, graft-modified propylene polymer or mixture thereof is employed in an amount of at least about 40 parts by weight, preferably at least about 45 parts by weight, more preferably at least about 50 parts by weight, even more preferably at least about 55 parts by weight, and most preferably at least about 60 parts by weight based on the weight of the total composition. The propylene polymer, graft-modified propylene polymer or mixture thereof is used in amounts less than or equal to about 95 parts by weight, preferably less than or equal to about 90 parts by weight, more preferably less than or equal to about 85 parts by weight, even more preferably less than or equal to about 80 parts by weight, and most preferably less than or equal to about 75 parts by weight based on the weight of the total composition.

Component (b) in the compositions of this invention is a polyolefin elastomer. Suitable polyolefin elastomers comprises one or more $C_2$ to $C_{20}$ alpha-olefins in polymerized form, having a glass transition temperature (Tg) less than 25°C, preferably less than 0°C, most preferably less than-25°C. Tg is the temperature or temperature range at which a polymeric material shows an abrupt change in its physical properties, including, for example, mechanical strength. $T_g$ can be determined by differential scanning calorimetry. Examples of the types of polymers from which the present polyolefin elastomers are selected include copolymers of alpha-olefins, such as ethylene and propylene, ethylene and 1-butene, ethylene and 1-hexene or ethylene and 1-octene copolymers, and terpolymers of ethylene, propylene and a diene comonomer such as hexadiene or ethylidene norbornene.

The polyolefin elastomer is one or more substantially linear ethylene polymer or one or more linear ethylene polymer (S/LEP), or a mixture of one or more of each. Both substantially linear ethylene polymers and linear ethylene polymers are known. Substantially linear ethylene polymers and their method of preparation are fully described in USP 5,272,236 and USP 5,278,272. Linear ethylene polymers and their method of preparation are fully disclosed in USP 3,645,992; USP 4,937,299; USP 4,701,432; USP 4,937,301; USP 4,935,397; USP 5,055,438; EP 129,368; EP 260,999; and WO 90/07526.

As used here, "a linear ethylene polymer" means a homopolymer of ethylene or a copolymer of ethylene and one or more alpha-olefin comonomers having a linear backbone (that is, no cross linking), no long-chain branching, a narrow molecular weight distribution and, for alpha-olefin copolymers, a narrow composition distribution. Further, as used here, "a substantially linear ethylene polymer" means a homopolymer of ethylene or a copolymer of ethylene and of one or more alpha-olefin comonomers having a linear backbone, a specific and limited amount of long-chain branching, a narrow molecular weight distribution and, for alpha-olefin copolymers, a narrow composition distribution.

Short-chain branches in a linear copolymer arise from the pendent alkyl group resulting upon polymerization of intentionally added $C_3$ to $C_{20}$ alpha-olefin comonomers. Narrow composition distribution is also sometimes referred to as homogeneous short-chain branching. Narrow composition distribution and homogeneous short-chain branching refer to the fact that the alpha-olefin comonomer is randomly distributed within a given copolymer of ethylene and an alpha-olefin comonomer and virtually all of the copolymer molecules have the same ethylene to comonomer ratio. The narrowness of the composition distribution is indicated by the value of the Composition Distribution Branch Index (CDBI) or sometimes referred to as Short Chain Branch Distribution Index. CDBI is defined as the weight percent of the polymer molecules having a comonomer content within 50 percent of the median molar comonomer content. The CDBI is readily calculated, for example, by employing temperature rising elution fractionation, as described in Wild, Journal of Polymer Science, Polymer Physics Edition, Volume 20, page 441 (1982), or USP 4,798,081. The CDBI for the substantially linear ethylene copolymers and the linear ethylene copolymers in the present invention is greater than about 30 percent, preferably greater than about 50 percent, and more preferably greater than about 90 percent.

Long-chain branches in substantially linear ethylene polymers are polymer branches other than short chain branches. Typically, long chain branches are formed by insitu generation of an oligomeric alpha-olefin via beta-hydride elimination in a growing polymer chain. The resulting species is a relatively high molecular weight vinyl terminated hydrocarbon which upon polymerization yields a large pendent alkyl group. Long-chain branching may be further defined as hydrocarbon branches to a polymer backbone having a chain length greater than n minus 2 ("n-2") carbons, where n is the number of carbons of the largest alpha-olefin comonomer intentionally added to the reactor. Preferred long-chain branches in homopolymers of ethylene or copolymers of ethylene and one or more $C_3$ to $C_{20}$ alpha-olefin comonomers have at least from 20 carbons up to more preferably the number of carbons in the polymer backbone from which the branch is pendant. Long-chain branching may be distinguished using $^{13}$C nuclear magnetic resonance spectroscopy alone, or with gel permeation chromatography-laser light scattering (GPC-LALS) or a similar analytical technique. Substantially linear ethylene polymers contain at least 0.01 long-chain branches/1000 carbons and preferably 0.05 long-chain branches/1000 carbons. In general, substantially linear ethylene polymers contain less than or equal to 3 long-chain branches/1000 carbons and preferably less than or equal to 1 long-chain branch/1000 carbons.

Preferred substantially linear ethylene polymers are prepared by using metallocene based catalysts capable of readily polymerizing high molecular weight alpha-olefin copolymers under the process conditions. As used here, copolymer means a polymer of two or more intentionally added comonomers, for example, such as might be prepared by polymerizing ethylene with at least one other $C_3$ to $C_{20}$ comonomer. Preferred linear ethylene polymers may be prepared in a similar manner using, for instance, metallocene or vanadium based catalyst under conditions that do not permit polymerization of monomers other than those intentionally added to the reactor. Other basic characteristics of substantially linear ethylene polymers or linear ethylene polymers include a low residuals content (that is, a low concentration therein of the catalyst used to prepare the polymer, unreacted comonomers and low molecular weight oligomers made during the course of the polymerization), and a controlled molecular architecture which provides good processability even though the molecular weight distribution is narrow relative to conventional olefin polymers.

While the substantially linear ethylene polymers or the linear ethylene polymers used in the practice of this invention include substantially linear ethylene homopolymers or linear ethylene homopolymers, preferably the substantially linear ethylene polymers or the linear ethylene polymers comprise between about 50 to about 95 weight percent ethylene and about 5 to about 50, and preferably about 10 to about 25 weight percent of at least one alpha-olefin comonomer. The comonomer content in the substantially linear ethylene polymers or the linear ethylene polymers is generally calculated based on the amount added to the reactor and as can be measured using infrared spectroscopy according to ASTM D-2238, Method B. Typically, the substantially linear ethylene polymers or the linear ethylene polymers are copolymers of ethylene and one or more $C_3$ to $C_{20}$ alpha-olefins, preferably copolymers of ethylene and one or more $C_3$ to $C_{10}$, alpha-olefin comonomers and more preferably copolymers of ethylene and one or more comonomers selected from the group consisting of propylene, 1-butene, 1-hexene, 4-methyl- 1-pentane, and 1-octene. Most preferably the copolymers are ethylene and 1-octene copolymers.

The density of these substantially linear ethylene polymers or linear ethylene polymers is equal to or greater than 0.850 grams per cubic centimeter (g/cm$^3$) and preferably equal to or greater than 0.860 g/cm$^3$. The density of these substantially linear ethylene polymers or linear ethylene polymers is less than or equal to about 0.931 g/cm$^3$ and preferably less than or equal to about 0.900 g/cm$^3$. The melt flow ratio for substantially linear ethylene polymers, measured as $I_{10}/I_2$, is greater than or equal to about 5.63, is preferably from about 6.5 to about 15, and is more preferably from about 7 to about 10. $I_2$ is measured according to ASTM Designation D 1238 using conditions of 190°C and 2.16 kilogram (kg) mass. $I_{10}$ is measured according to ASTM Designation D 1238 using conditions of 190°C and 10.0 kg mass.

The molecular weight distribution ($M_w/M_n$) for substantially linear ethylene polymers is the weight average molecular weight ($M_w$) divided by number average molecular weight ($M_n$). $M_w$ and $M_n$ are measured by gel permeation chromatography (GPC). For substantially linear ethylene polymers, the $I_{10}/I_2$ ratio indicates the degree of long-chain branching, that is, the larger the $I_{10}/I_2$ ratio, the more long-chain branching exists in the polymer. In preferred substantially linear ethylene polymers $M_w/M_n$ is related to $I_{10}/I_2$ by the equation: $M_w/M_n \leq (I_{10}/I_2)$ - 4.63. Generally, $M_w/M_n$ for substantially linear ethylene polymers is preferably at least about 1.5 and preferably at least about 2.0 and is less than or equal to about 3.0. In a most preferred embodiment, substantially linear ethylene polymers are also characterized by a single differential scanning calorimetry (DSC) melting peak.

The preferred $I_2$ melt index for these substantially linear ethylene polymers or linear ethylene polymers is from about 0.01 g/10 min. to about 100 g/10 min., and more preferably about 0.1 g/10 min. to about 10 g/10 min.

The preferred $M_w$ for these substantially linear ethylene polymers or linear ethylene polymers is equal to or less than about 180,000, preferably equal to or less than about 160,000, more preferably equal to or less than about 140,000 and most preferably equal to or less than about 120,000. The preferred $M_w$ for these substantially linear ethylene polymers or linear ethylene polymers is equal to or greater than about 40,000, preferably equal to or greater than about 50,000, more preferably equal to or greater than about 60,000, even more preferably equal to or greater than about 70,000, and most preferably equal to or greater than about 80,000.

The substantially linear ethylene polymer or linear ethylene polymer is employed in the blend of the present invention in amounts sufficient to provide the desired balance of processability and impact resistance. The substantially linear ethylene polymer or linear ethylene polymer is employed in amounts of at least about 1 part by weight, preferably at least about 2 parts by weight, more preferably at least about 3 parts by weight, even more preferably at least about 4 parts by weight and most preferably at least about 5 parts by weight based on the weight of the total composition. The substantially linear ethylene polymer or linear ethylene polymer is used in amounts less than or equal to about 20 parts by weight, preferably less than or equal to about 17 parts by weight, more preferably less than or equal to about 15 parts by weight, even more preferably less than or equal to about 12 parts by weight and most preferably less than or equal to about 10 parts by weight based on the weight of the total composition.

Component (c) of the present invention is a fibril forming fluoropolymer. Suitable fluoropolymers are polytetrafluoroethylene (PTFE), modifications thereof such as an acrylic-modifued PTFE; ethylene-propylene fluoride (FEP) polymer; and a perfluoroalkoxy (PFA) polymer. Of these PTFE is preferred. Especially preferred is fibril forming PTFE which is made by dispersion or emulsion polymerization process, in which the particles remain dispersed in the reaction mix during the polymerization. The particles fibrillate under the influence of shear forces while being mixed with the propylene polymer and polyolefin elastomer components of the propylene polymer composition of the present invention. Fibril forming fluoropolymers are well known in the art and are commercially available. Such compositions are described in USP 3,005,795; 3,142,665; 3,671,487; 4,016,345; and 4,463,130. Commercially available types of PTFE include TEFLON™ TFE fluorocarbon resin grades 6, 6C, 6CN, 60, 62, 64, 65, 67, and the like available from E.I. du Pont de Nemours & Co. and acrylic-modified PTFE include METABLEN™ A3000 and A3800 from Mitsubishi Rayon Co. Ltd.

The level of fluoropolymer in the propylene polymer compositions of the present invention is equal to or greater than about 0.01 part, preferably equal to or greater than about 0.1 part, more preferably equal to or greater than about 0.5 part and most preferably equal to or greater than about 0.7 part by weight based on the weight of the propylene polymer composition. The level of the fluoropolymer in the propylene polymer of the present invention is equal to or less than about 5 parts, preferably equal to or less than about 3 parts, more preferably equal to or less than about 1 part, and most preferably equal to or less than about 0.8 parts by weight based on the weight of the propylene polymer composition. When the level of fluoropolymer is within these ranges, flow marks of the propylene polymer compositions are improved and the toughness, especially low temperature impact is excellent. It is preferable that the fibril forming fluoropolymer is dispersed in the propylene polymer composition in a substantially uniform manner.

Optionally, the propylene polymer composition comprises component (d) a filler such as calcium carbonate, talc, clay, mica, wollastonite, hollow glass beads, titaninum oxide, silica, carbon black, glass fiber or potassium titanate. Preferred fillers are talc, wollastonite, clay, single layers of a cation exchanging layered silicate material or mixture thereof. Talcs, wollastonites, and clays are generally known fillers for various polymeric resins. See for example USP 5,091,461 and 3,424,703; EP 639,613 A1; and EP 391,413, where these materials and their suitability as filler for polymeric resins are generally described.

Preferred talcs and clays are uncalcined having very low free metal oxide content. The mineral talcs best suited are hydrated magnesium silicates as generally represented by the theoretical formula

$$3MgO \cdot 4SiO_2 \cdot H_2O$$

Compositions of talcs may vary somewhat with locality in which they are mined. Montana talcs, for example, closely approach this theoretical composition. Suitable mineral talcs of this type are commercially available as VANTALC F2003 available from Orlinger and JETFIL™ 700C available from Minerals Technology.

Examples of preferred cation exchanging layered silicate materials include biophilite, kaolinite, dickalite or talc clays; smectite clays; vermiculite clays; mica; brittle mica; Magadiite; Kenyaite; Octosilicate; Kanemite; and Makatite. Preferred cation exchanging layered silicate materials are smectite clays, including montmorillonite, bidelite, saponite and hectorite.

Preferred fillers have an average length to thickness ratio (L/T) preferably from about 1 to about 10,000 and provide the desired levels of physical and other property requirements such as toughness and stiffness (modulus). Several varieties of cation exchanging layered silicate materials, talc, wollastonite, clay and mixtures thereof have been found to be especially suitable.

The suitability of cation exchanging layered silicate material fillers in maintaining the Preferred levels of toughness and stiffness of molded articles prepared from the resin has been found to be a function of the average L/T of the filler particles together with obtaining a uniformly small particle-sized filler. Highly preferred are those compositions incorporating fillers having an average L/T as measured according to the below-described technique of at least about 1, preferably at least about 15, more preferably at least about 50, even more preferably at least about 100, and most preferably at least about 200. With regard to the maximum level for the L/T ratio, it has been found desirable to have a value up to and inchiding about 10,000, preferably up to and including about 5,000, more preferably up to and including about 1,000, even more preferably up to and including about 500, and most preferably up to and including about 200.

The suitability of non-cation exchanging layered silicate material fillers, such as calcium carbonate, talc, clay, mica, wollastonite, hollow glass beads, titaninum oxide, silica, carbon black, glass fiber, potassium, titanate, etc., in maintaining the preferred levels of toughness and stiffness of molded articles prepared from the resin has been found to be a function of the average L/T of the filler particles together with obtaining a uniformly small particle-sized filler. Highly preferred are those compositions incorporating fillers having an average L/T as measured according to the below-described technique of at least about 1, preferably at least about 1.5, more preferably at least about 2, even more preferably at least about 3, and most preferably at least about 4. With regard to the maximum level for the L/T ratio, it has been found desirable to have a value up to and including about 30, preferably up to and including about 20, more preferably up to and including about 15, even more preferably up to and including about 10, and most preferably up to and including about 4.

for determining the particle size and L/T ratio, the length of the fillers (or longest dimension, such as the diameter of a plate-shaped particle) as well as their thickness (shortest dimension of the 2 dimensions measurable) can be measured by preparing a filler modified polymeric resin sample and measuring the particle dimensions of the dispersed particles from digitized images produced by back scattered electron imaging using a scanning electron microscope and analyzing the digitized images in an image analyzer. Preferably, the size of the image is at least 10X the size of the maximum particle size.

The propylene polymer compositions included within the scope of this invention generally utilize such inorganic fillers with a number average particle size as measured by back scattered electron imaging using a scanning electron microscope of less than or equal to about 10 micrometers ($\mu$m) preferably less than or equal to about 3 $\mu$m, more preferably less than or equal to about 2 $\mu$m, more preferably less than or equal to about 1.5 $\mu$m and most preferably less than or equal to about 1.0 $\mu$m. In general, smaller average particle sizes equal to or greater than about 0.001 $\mu$m, preferably equal to or greater than about 0.01 $\mu$m, more preferably equal to or greater than about 0.1 $\mu$m, or most preferably equal to or greater than 0.5 $\mu$m, if available, could very suitably be employed.

Fillers may be employed to obtain optimized combinations of toughness and stiffness in the propylene polymer compositions according to the present invention. If present, the filler is employed in an amount of at least about 1 part by weight, preferably at least about 3 parts by weight, more preferably at least about 5 parts by weight, even more preferably at least about 10 parts by weight, and most preferably at least about 15 parts by weight based on the total weight of the composition. Usually it has been found sufficient to employ an amount of filler up to and including about 25 parts by weight, more preferably up to and including about 20 parts by weight, and most preferably up to and including about 15 parts by weight based the total weight of the composition.

Optionally, the propylene polymer composition further comprises (e) an additional polymer which is a resin other than components (a), (b), and (c) above. Preferred additional polymers are polyethylene, preferably low density polyethylene (LDPE), linear low density polyethylene (LLDPE), and high density polyethylene (HDPE), polystyrene, polycyclohexylethane, polyesters, such as polyethylene terephthalate, ethylene/styrene interpolymers, syndiotactic PP, syndiotactic PS, ethylene/propylene copolymers (EP), ethylene/propylene/diene terpolytner (EPDM), and mixtures thereof. If present, the ' additional polymer is employed in amounts of equal to or greater than about 1 part by weight, preferably equal to or greater than about 3 parts by weight, more preferably equal to or greater than about 5 parts by weight, and most preferably equal to or greater than about 7 parts by weight based on the weight of the propylene polymer composition. In general, the additional polymer is used in amounts less than or equal to about 40 parts by weight, preferably less than or equal to about 20 parts by weight, more preferably less than or equal to about 15 parts by weight, more preferably less than or equal to about 10 parts by weight, and most preferably less than or equal to about 8 parts by weight based on the weight of the propylene polymer composition.

The compositions of the present invention can comprise (f) a slip agent. Preferred slip agents are a saturated fatty acid amide or ethylenebis(amide), an unsaturated fatty acid amide or ethylenebis(amide) or combinations thereof. The saturated fatty amides useful in the present invention conform essentially to the empirical formula

$$RC(O)NHR^1$$

where R is a saturated alkyl group having of from 10 carbon atoms to 26 carbon atoms and $R^1$ is independently hydrogen or a saturated alkyl group having of from 10 carbon atoms to 26 carbon atoms. Compounds which conform to the above empirical structure are for example, palmitamide, stearamide, arachidamide, behenamide, stearyl stearamide, palmityl pamitamide, stearyl arachidamide and mixtures thereof.

The saturated ethylenebis(amides) useful in the present invention conform essentially to the empirical formula

$$RC(O)NHCH_2CH_2NHC(O)R$$

where R is as defined previously. Compounds which conform to the above empirical structure are for example, stearamidoethylstearamide, stearamidoethylpalmitamide, palrnitanudo-ethylstearamide and mixtures thereof.

The unsaturated fatty amides useful in the present invention conform essentially to the empirical formula

$$R^2C(O)NHR^3$$

where $R^2$ is an unsaturated alkyl group having of from 10 carbon atoms to 26 carbon atoms and $R^3$ is independently hydrogen or a unsaturated alkyl group having of from 10 carbon atoms to 26 carbon atoms. Compounds which conform to the above empirical structure are for example, oleamide, erucamide, linoleamide, and mixtures thereof.

The unsaturated ethylenebis(amides.) useful in the present invention conform essentially to the empirical formula

$$R^4C(O)NHCH_2CH_2NHC(O)R^4$$

where $R^4$ is either a saturated or unsaturated alkyl group having of from 10 carbon atoms to 26 carbon atoms with the proviso that at least one of $R^4$ is unsaturated. Compounds which conform to the above empirical structure include, erucamidoethylerucamide, oleamidoethyloleamide, erucamidoethyloleamide, oleamidoethylerucamide, stearamidoethylerucamide, erucamidoethylpalmitamide, palmitamidoethyloleamide and mixtures thereof.

Generally preferred concentrations of the saturated fatty acid amide or ethylerie-bis(amide) are in the range of from about 0 parts to about 5 parts by weight, preferably of from about .0025 parts to about .25 parts by weight and most preferably of from about .015 parts to about 15 parts by weight based on the weight of the total composition. Generally, preferred concentrations of the unsaturated fatty acid amide or ethylene-bis(amide) are in the range of from about 0 parts to about 1 parts by weight, preferably of from about .05 parts to about .75 parts by weight and most preferably of from about .1 parts to about .3 parts by weight based on the weight of the total composition.

Further, the claimed propylene polymer compositions may also optionally contain one or more additives that are commonly used in propylene polymer compositions of this type. Preferred additives of this type include, but are not limited to: ignition resistant additives, stabilizers, colorants, antioxidants, antistats, flow enhancers, mold releases, such as metal stearates (for example, calcium stearate, magnesium stearate), nucleating agents, including clarifying agents, etc. Preferred examples of additives are ignition resistance additives, such as, but not limited to halogenated hydrocarbons, halogenated carbonate oligomers, halogenated diglycidyl ethers, organophosphorous compounds, fluorinated olefins, antimony oxide and metal salts of aromatic sulfur, or a mixtures thereof may be used. Further, compounds which stabilize polymer compositions against degradation caused by, but not limited to heat, light, and oxygen, or a mixture thereof may be used.

If used, such additives may be present in an amount from at least about 0.01 parts, preferably at least about 0.1 parts, more preferably at least about 1 parts, more preferably at least about 2 parts and most preferably at least about 5 parts by weight based on the total weight of the composition. Generally, the additive is present in an amount less than or equal to about 25 parts, preferably less than or equal to about 20. parts, more preferably less than or equal to about 15 parts, more preferably less than or equal to about 12 parts, and most preferably less than or equal to about 10 parts by weight based on the total weight of composition.

Preparation of the propylene polymer compositions of this invention can be accomplished by any suitable mixing means known in the art, including dry blending the individual components and subsequently melt mixing, either directly in the extruder used to make the finished article (for example, the automotive part), or pre-mixing in a separate extruder (for example, a Banbury mixer). Dry blends of the compositions can also be directly injection molded without pre-melt mixing. Alternatively, the propylene polymer and the polyolefin elastomer may be prepared in the same reactor.

The propylene polymer compositions of the present invention are thermoplastic. When softened or melted by the application of heat, the polymer blend compositions of this invention can be formed or molded using conventional techniques such as compression molding, injection molding, gas assisted injection molding, calendering, vacuum forming, thermoforming, extrusion and/or blow molding, alone or in combination. The polymer blend compositions can also be formed, spun, or drawn into films, fibers, multi-layer laminates or extruded sheets, or can be compounded with one or more organic or inorganic substances, on any machine suitable for such purpose. The propylene polymer compositions of the present invention are preferably injection molded. Some of the fabricated articles include exterior and interior automotive parts, for example, bumper beams, bumper fascia, pillars, instrument panels and the like; in electrical and electrical equipment device housing and covers; as well as other household and personal articles, including, for example, appliance housings, house wares, freezer containers, and crates; lawn and garden furniture; and building and construction sheet.

To illustrate the practice of this invention, examples of the preferred embodiments are set forth below. However, these examples do not in any manner restrict the scope of this invention.

EXAMPLES

Examples 1 to 4 and Comparative Examples A and B are propylene polymer compositions compounded on a Werner and Pfleiderer ZSK-40, 40 millimeter (mm) twin screw extruder. In Example 1 and Comparative Example A, talc is fed through a side feeder; the balance of components are pre-blended prior to feeding into the extruder. Ins Examples 2 to 4 and Comparative Example B talc if fed through the main feeder. The following are the compounding conditions on the ZSK-40 extruder for Example 1 and Comparative Example A: Barrel temperature profile: 170°C, 180°C, 190°C, 195°C, 200°C, 205°C, and 205°C; Die temperature: 210°C; Melt temperature: 225°C; Feed rate: 75 Kg/hour; Screw speed: 500 revolutions per minute (rpm); Die pressure: 13 bar; and Torque: 28 percent. The die has nine holes. The extrudate is cooled in the form of strands and comminuted as pellets. The pellets are dried for 2 hours at 80°C prior to injection molding test specimens on a Krauss Mafei injection molding machine, having the following molding conditions: Barrel temperature profile: 215°C to 235°C; Nozzle temperature 230°C; Mold temperature: 30°C; Injection speed: 35% of maximum allowed by the machine; Injection pressure: 160 bars; Holding pressure: 53 bars; Holding time: 8 seconds; Cooling time: 25s; and Total cycle time: 51s.

The compositions for Example 1 and Comparative Example A are given in Table 1 below in parts by weight based on the weight of the total composition. The compositions for Examples 2 to 5 are given in Table 2 below in parts by weight based on the weight of the total composition. In Table 1 and Table 2: .

"PP" is a propylene copolymer comprising 8 weight percent ethylene having a density of 0.9 g/cm$^3$ and a MFR of 44 g/10 min. at 230°C under a load of 2.16 kg available as C705-44 NA HP from The Dow Chemical Company;

"SLEP-1" is a saturated substantially linear ethylene-octene copolymer 20 weight percent 1-octene having a density of 0.868 g/cm$^3$ and a MFR of 5.0 g/10 min. at 190°C under a load of 2.16 kg available as AFFINITY™ EG 8200 Polyolefin Elastomer from the Dow Chemical Company;

"SLEP-2" is a saturated substantially linear ethylene-octene copolymer having a density of 0.868 g/cm$^3$ and a MFR of 0.5 g/10 min. at 190°C under a load of 2.16 kg available as AFFINITY EG 81.50 G Polyolefin Elastomer from the Dow Chemical Company;

"HDPE" is a high density polyethylene powder with a density of 0.96 g/cm$^3$ and a MFR of 1.1 at 190°C under a load of 2.16 kg;

"LLPDE" is a linear low density polyethylene powder with a density of 0.922 to 0.926 g/cm$^3$ and a MFR of 20 at 190°C under a load of 2.16 kg;

"PTFE-1" is a fibril forming polytetrafluoroethylene available as TEFLON™ 6CN from E.I. du Pont de Nemours & Co.;

"PTFE-2" is an acrylic-modified PTFE available as METABLEN A3000 from Mitsubishi Rayon Co. Ltd;

"Talc-1" is a high-purity, asbestos-free hydrous magnesium silicate available as HTP ULTRA™ 5C having a mean particle size of about 0.7 micron and top particle size of about 2 microns from Hipro Trading Co.;

"Talc-2" is a high-purity, asbestos-free hydrous magnesium silicate available as HTP 1C from having a mean particle size of about 2 micron and top particle size of about 7 microns from Hipro Trading Co.;

"IRGANOX™ B215" is a 2:1 blend of tris(2, 4-di-tert-butyl-phenyl)phosphate and tetrakis(methylene(3,5-di-tert-butyl-4-hydroxyhydrocinnamate))methane and is available as IRGANOX B215 from Ciba Specialty Chemicals;

"CHIMASSORBTM 119 FL is a UV stabilizer available from Ciba Specialty Chemicals;

"TTNUVIN™ 770 DF is a UV stabilizer available from Ciba Specialty Chemicals; and

"Erucamide" is available as ARMOSLIP™ E from Akzo Nobel Polymer Chemicals;

The following rheological, physical, and appearance tests are performed on Example 1 to 5 and Comparative Example A and the results are reported in Table 1 and Table 2:

"Ash" content is determined according to ISO 3451;

"Density" is determined according to ISO 1183;

"MFR" melt flow rate is determined according to ISO 1133 at 230°C under a load-oaf 2.16 kg;

"Tensile Strength, Elongation, and Modulus" are determined according to ISO 527;

"Flexural Strength and Modulus" are determined according to ISO 178;

"Notched Izod" is determined according to ISO 180/A at -30°C, -20°C, -10°C, 0°C, and/or 23°C;

"Charpy Impact" is determined according to ISO 179 at -30°C and 23°C;

"Dart Impact" is 3 mm falling dart impact determined according to ISO 6603 at - 20°C, 0°C and/or -10°C. The following is the evaluation criteria for falling dart impact: D;DC;DSC;BD;DP;BP;B where

D = ductile failure (acceptable)
DC = ductile failure with crack (acceptable)
DSC = ductile with support crack failure (acceptable)
BD = brittle/ductile failure (unacceptable)
DP = ductile punch-out failure (unacceptable)
BP = brittle/punch-out failure (unacceptable)
B = brittle failure (unacceptable);

"HDT" is heat deflection temperature determined according to ISO 75 at 0.45 MPa and 1.81 MPa;
"Vicat" softening point is determined according to ISO 306 at 10N;
"Gloss" is Gardner gloss; and
"Flow Lines" or alternate bands of dull and glossy surface appearance, are determined by visual inspection.

As can be see in Table 1 and Table 2, the propylene polymer compositions of the present invention demonstrate and excellent balance of physical properties with no flow lines and/or low gloss, in particularly improved impact at ambient and low temperatures.

Table 1

| Example<br>Comparative Example | 1 | A |
|---|---|---|
| COMPONENTS | | |
| PP | 63.9 | 64.6 |
| SLEP-1 | 14 | 14 |
| Talc-1 | 18 | 18 |
| HDPE | 2 | 2 |
| PTFE-1 | 0.7 | |
| Erucamide | 0.2 | 0.2 |
| IRGANOX B215 | 0.2 | 0.2 |
| Pigment | 1 | 1 |
| PROPERTIES | | |
| MFR at 230°C/2.16 Kg, g/10 min. | 10.7 | 24.2 |
| Tensile Modulus, MPa | 1563 | 1560 |
| Flexural Modulus, MPa | 1670 | 1760 |
| Notched Izod, J/M | | |
| -30°C | 4.7 | 4.3 |
| -20°C | 5.6 | 5.5 |
| -10°C | 6.9 | 6.7 |
| 0°C | 20.5 | 10.4 |
| 23°C | 35.3 | 34.6 |
| Dart Impact, Total, J | | |
| -20°C | 57.6 | 43 |
| -10°C | 55.4 | 18.9 |
| Flow Lines | No | Yes |

Table 2

| Example Comparative Example - | B | 2 | 3 | 4 |
|---|---|---|---|---|
| COMPONENTS | | | | |
| PP | balance | balance | balance | balance |
| SLEP-2 | 11 | 11 | 11 | 10 |
| Talc -1 | 23 | 23 | 23 | |
| Talc-2 | | | | 23 |
| LLDPE | 3 | 3 | 3 | 4 |
| PTFE-1 | 0 | | 0.25 | 0.25 |
| PTFE-2 | | 0.25 | | |
| Erucamide | 0.2 | 0.2 | 0.2 | 0.2 |
| IRGANOX B215 | 0.1 | 0.1 | 0.1 | 0.1 |
| CHIMASSORB 119 FL | 0.2 | 0.2 | 0.2 | 0.1 |
| TINWIN 770 DF | | | | 0.1 |
| PROPERTIES | | | | |
| Density, g/cm$^3$ | 1.0914 | 1.0927 | 1.0957 | 1.101 |
| Ash content, % | 25.7 | 24.7 | 25.8 | 26.4 |
| MFR at 230°C/2.16 Kg, g/10 min. | 26.1 | 20.9 | 19.5 | 19.69 |
| Tensile Strength @ Yield, MPa | 22.49 | 20.01 | 21.17 | 21.25 |
| Tensile Strength @ Break, MPa | 12.19 | 12.07 | 11.84 | 12.36 |
| Tensile Elongation @ Yield, % | 3.76 | 4.48 | 4.09 | 3.97 |
| Tensile Elongation @ Break, % | 21.08 | 66.12 | 49.01 | 53.53 |
| Tensile Modulus, MPa | 1954 | 1623 | 1828 | 2135 |
| Flexural Strength,MPa | 33.27 | 28.25 | 30.67 | 32.01 |
| Flexural Modulus, MPa | 2265 | 1912 | 2122 | 2372 |
| Charpy, kJ/m$^2$ | | | | |
| 23°C | 38.5 | 49.2 | 40.8 | 37.3 |
| -30°C | 3.6 | 5.7 | 5.1 | 4.5 |
| Notched Izod, J/M | | | | |
| 23°C | 35.8 | 43.9 | 36.9 | 37.7 |
| 0°C | 8.8 | 31.3 | 19.7 | 13.7 |
| -30°C | 4.1 | 6.1 | 6.1 | 4.1 |
| Dart Impact @ 0°C, Total, J | 54.13 | 63.41 | 5921 | 43.36 |
| Dart Impact @ 0°C, Distance, mm | 24 | 30.1 | 28.2 | 24.5 |

(continued)

| PROPERTIES | | | | |
|---|---|---|---|---|
| Dart Impact @ 0°C, Evaluation | 20;30;30;0;20;0;0 | 100;0;0;0;0;0;0 | 100;0;0;0;0;0;0 | 60;30;10;0;0;0;0 |
| HDT @ 0.45 MPa, °C | 101.45 | 92.5 | 99 | 106.6 |
| HDT @ 1.81 MPa, °C | 56.7 | 53.5 | 52.5 | 62.55 |
| Vicat, C | 138.65 | 13025 | 136.6 | 139.1 |
| Gloss, % | 44 | 28 | 32 | 30 |

**Claims**

1. A propylene polymer composition comprising:

   (a) from about 40 to about 95 parts of a propylene polymer wherein the propylene polymer is a homopolymer of propylene, a copolymer of propylene and a $C_2$ or $C_4$ to $C_{20}$ alpha-olefin, or mixtures thereof;
   (b) from about 1 to about 20 parts by weight of a polyolefin elastomer wherein the polyolefin elastomer is a substantially linear ethylene polymer, a linear ethylene polymer or combinations thereof, wherein the substantially linear ethylene polymer and linear ethylene polymer are characterized as having:

   (i) a density of less than about 0.93 $g/cm^3$,
   (ii) a molecular weight distribution, $M_w/M_n$, of less than about 3.0, and
   (iii) a Composition Distribution Branch Index of greater than 30 percent;

   (c) from about 0.01 to about 5 parts by weight of a fibril forming fluoropolymer, and
   (d) from 0 to about 25 parts of a filler,

   wherein parts are parts by weight based on the total weight of the propylene polymer composition.

2. The composition of Claim I wherein the substantially linear ethylene polymer or linear ethylene polymer is a copolymer of ethylene with a $C_3$ to $C_{20}$ alpha-olefin.

3. The composition of Claim I wherein the substantially linear ethylene polymer or linear ethylene polymer is a copolymer of ethylene with propylene, 1-butene, 1-hexene, 4-methyl-1-pentane or 1-octene.

4. The propylene polymer composition of Claim 1 wherein the fluoropolymer is present in an amount from 0.1 to 1 parts by weight.

5. The propylene polymer composition of Claim 1 wherein the filler is present in an amount from 1 to 20 parts by weight.

6. The composition of Claim 5 wherein the filler is talc, wollastonite, clay, single layers of a cation exchanging layered silicate material or mixtures thereof.

7. The composition of Claim 6 wherein the filler is talc.

8. The propylene polymer composition of Claim I further comprising (e) from about 1 part to about 20 parts of an additional polymer selected from low density polyethylene, linear low density polyethylene, high density polyethylene, polystyrene, polycyclohexylethane, polyester, ethylene/styrene interpolymer, syndiotactic polypropylene, syndiotactic polystyrene, ethylenelpropylene copolymer, ethylene/propylene/diene terpolymer, or mixtures thereof.

9. The propylene polymer composition of Claim I further comprising (e) from about 1 part to about 10 parts of a high density polyethylene.

10. The propylene polymer composition of Claim 1 further comprising (e) from about 1 part to about 10 parts of a linear low density polyethylene.

**11.** The propylene polymer of Claim 1 further comprising from 0.1 to part of (f) a slip agent selected from erucamide, oleamide, linoleamide, or steramide.

**12.** The propylene polymer composition of Claim I further comprising pigment(s), an UV stabilizer, or combinations thereof.

**13.** A method for preparing a propylene polymer composition comprising the step of combining:

(a) from about 40 to about 95 parts of a propylene polymer wherein the propylene polymer is a homopolymer of propylene, a copolymer of propylene and a $C_2$ or $C_4$ to $C_{20}$ alpha-olefin, or mixtures thereof;
(b) from about I to about 20 parts by weight of a polyolefin elastomer wherein the polyolefin elastomer is a substantially linear ethylene polymer, a linear ethylene polymer or combinations thereof, wherein the substantially linear ethylene polymer and linear ethylene polymer are characterized as having:

(i) a density of less than about 0.93 g/cm$^3$,
(ii) a molecular weight distribution, $M_w/M_n$, of less than about 3.0, and
(iii) a Composition Distribution Branch Index of greater than 30 percent;

(c) from about 0.01 to about 5 parts by weight of a fibril forming fluoropolymer, and
(d) from 0 to 25 parts of a filler,

wherein parts are parts by weight based on the total weight of the propylene polymer composition.

**14.** A method for producing a molded or extruded article of a propylene polymer composition comprising the steps of:

(A) preparing a propylene polymer composition comprising:

(a) from about 40 to about 95 parts of a propylene polymer wherein the propylene polymer is a homopolymer of propylene, a copolymer of propylene and a $C_2$ or $C_4$ to $C_{20}$ alpha-olefin, or mixtures thereof;
(b) from about 1 to about 20 parts by weight of a polyolefin elastomer wherein the polyolefin elastomer is a substantially linear ethylene polymer, a linear ethylene polymer or combinations thereof, wherein the substantially linear ethylene polymer and linear ethylene polymer are characterized as having:

(i) a density of less than about 0.93 g/cm$^3$,
(ii) a molecular weight distribution, $M_w/M_n$, of less than about 3.0, and
(iii) a Composition Distribution Branch Index of greater than 30 percent;

(c) from about 0.01 to about 5 parts by weight of a fibril forming fluoropolymer, and
(d) from 0 to 25 parts of a filler,
wherein parts are parts by weight based on the total weight of the propylene polymer composition and

(B) molding or extruding said propylene polymer composition into a molded or an extruded article.

**15.** The composition of Claim 1 in the form of a molded or an extruded article.

**16.** The molded or extruded article of Claim 15 is selected from an automotive bumper beam, an automotive bumper fascia, an automotive pillar, an automotive instrument panel, an electrical equipment device housing, an electrical equipment device cover, an appliance housing, a freezer container, a crate, or lawn and garden furniture.

**Patentansprüche**

**1.** Propylenpolymerzusammensetzung, umfassend:

(a) etwa 40 bis etwa 95 Teile Propylenpolymer, wobei das Propylenpolymer ein Homopolymer aus Propylen, ein Copolymer aus Propylen und einem $C_2$- oder $C_4$- bis $C_{20}$-$\alpha$-Olefin oder eine Mischung davon ist;

(b) etwa 1 bis etwa 20 Gew.-Teile eines Polyolefinelastomers, wobei das Polyolefinelastomer ein im Wesentlichen geradkettiges Ethylenpolymer, ein geradkettiges Ethylenpolymer oder Kombinationen davon ist, wobei das im Wesentlichen geradkettige Ethylenpolymer und das geradkettige Ethylenpolymer **dadurch gekennzeichnet ist, dass** es Folgendes aufweist:

(i) eine Dichte von weniger als etwa 0,93 g/cm$^3$,
(ii) eine Molekulargewichtsverteilung $M_w/M_n$ von weniger als etwa 3,0 und
(iii) einen Zusammensetzungsverteilungsverzweigungsindex von größer als 30 %;

(c) etwa 0,01 bis etwa 5 Gew.-Teile eines Fibrille bildenden Fluorpolymers und
(d) 0 bis etwa 25 Teile eines Füllstoffs,

wobei Teile Gewichtsteile bezogen auf das Gesamtgewicht der Propylenpolymerzusammensetzung sind.

2. Zusammensetzung gemäß Anspruch 1, wobei das im Wesentlichen geradkettige Ethylenpolymer oder geradkettige Ethylenpolymer ein Copolymer aus Ethylen mit einem $C_3$- bis $C_{20}$-$\alpha$-Olefin ist.

3. Zusammensetzung gemäß Anspruch 1, wobei das im Wesentlichen geradkettige Ethylenpolymer oder geradkettige Ethylenpolymer ein Copolymer aus Ethylen mit Propylen, 1-Buten, 1-Hexen, 4-Methyl-1-pentan oder 1-Octen ist.

4. Propylenpolymerzusammensetzüng gemäß Anspruch 1, wobei das Fluorpolymer in einer Menge von 0,1 bis 1 Gew.-Teilen vorliegt.

5. Propylenpolymerzusammensetzung gemäß Anspruch 1, worin der Füllstoff in einer Menge von 1 bis 20 Gew.-Teilen vorliegt.

6. Zusammensetzung gemäß Anspruch 5, worin der Füllstoff Talk, Wollastonit, Ton, Einzelschichten aus einem Kation austauschenden Schichtsilikatmaterial oder Mischungen davon ist.

7. Zusammensetzung gemäß Anspruch 6, worin der Füllstoff Talk ist.

8. Propylenpolymerzusammensetzung gemäß Anspruch 1, die ferner (e) etwa 1 Teil bis etwa 20 Teile eines zusätzlichen Polymers umfasst, das aus Polyethylen mit niedriger Dichte, geradkettigem Polyethylen mit niedriger Dichte, Polyethylen mit hoher Dichte, Polystyrol, Polycyclohexylethan, Polyester, Ethylen/Styrol-Interpolymer, syndiotaktischem Polypropylen, syndiotaktisches Polystyrol, Ethylen/Propylen-Copolymer, Ethylen/Propylen/Dien-Terpolymer oder Mischungen davon ausgewählt wird.

9. Propylenpolymerzusammensetzung gemäß Anspruch 1, das ferner (e) etwa 1 Teil bis etwa 10 Teile eines Polyethylens mit hoher Dichte umfasst.

10. Propylenpolymerzusammensetzung gemäß Anspruch 1, das ferner (e) etwa 1 Teil bis etwa 10 Teile eines geradkettigen Polyethylens mit niedriger Dichte umfasst.

11. Propylenpolymer gemäß Anspruch 1, das ferner 0,1 bis 1 Teil (f) eines Gleitmittels, ausgewählt aus Erucamid, Oleamid, Linolamid oder Steramid, umfasst.

12. Propylenpolymerzusammensetzung gemäß Anspruch 1, das ferner Pigment(e), einen UV-Stabilisator oder Kombinationen davon umfasst.

13. Verfahren zur Herstellung einer Propylenpolymerzusammensetzung, umfassend den Schritt des Kömbinierens von:

(a) etwa 40 bis etwa 95 Teile Propylenpolymer, wobei das Propylenpolymer ein Homopolymer aus Propylen, ein Copolymer aus Propylen und einem $C_2$- oder $C_4$- bis $C_{20}$-$\alpha$-Olefin oder eine Mischung davon ist;
(b) etwa 1 bis etwa 20 Gew.-Teile eines Polyolefinelastomers, wobei das Polyolefinelastomer ein im Wesentlichen geradkettiges Ethylenpolymer, ein geradkettiges Ethylenpolymer oder Kombinationen davon ist, wobei das im Wesentlichen geradkettige Ethylenpolymer und das geradkettige Ethylenpolymer **dadurch gekennzeichnet ist, dass** es Folgendes aufweist:

(i) eine Dichte von weniger als etwa 0,93 g/cm$^3$,
(ii) eine Molekulargewichtsverteilung $M_w/M_n$ von weniger als etwa 3,0 und
(iii) einen Zusammensetzungsverteilungsverzweigungsindex von größer als 30 %;

(c) etwa 0,01 bis etwa 5 Gew.-Teile eines Fibrille bildenden Fluorpolymers und
(d) 0 bis etwa 25 Teile eines Füllstoffs,

wobei Teile Gewichtsteile bezogen auf das Gesamtgewicht der Propylenpolymerzusammensetzung sind.

**14.** Verfahren zur Herstellung eines geformten oder extrudierten Gegenstands aus einer Propylenpolymerzusammensetzung, umfassend die folgenden Schritte:

(A) Herstellen einer Propylenpolymerzusammensetzung, umfassend:

(a) etwa 40 bis etwa 95 Teile Propylenpolymer, wobei das Propylenpolymer ein Homopolymer aus Propylen, ein Copolymer aus Propylen und einem $C_2$- oder $C_4$-bis $C_{20}$-$\alpha$-Olefin oder eine Mischung davon ist;
(b) etwa 1 bis etwa 20 Gew.-Teile eines Polyolefinelastomers, wobei das Polyolefinelastomer ein im Wesentlichen geradkettiges Ethylenpolymer, ein geradkettiges Ethylenpolymer oder Kombinationen davon ist, wobei das im Wesentlichen geradkettige Ethylenpolymer und das geradkettige Ethylenpolymer **dadurch gekennzeichnet ist, dass** es Folgendes aufweist:

(i) eine Dichte von weniger als etwa 0,93 g/cm$^3$,
(ii) eine Molekulargewichtsverteilung $M_w/M_n$ von weniger als etwa 3,0 und
(iii) einen Zusammensetzungsverteilungsverzweigungsinde x von größer als 30 %;

(c) etwa 0,01 bis etwa 5 Gew.-Teile eines Fibrille bildenden Fluorpolymers und
(d) 0 bis etwa 25 Teile eines Füllstoffs,

wobei Teile Gewichtsteile bezogen auf das Gesamtgewicht der Propylenpolymerzusammensetzung sind und
(B) Formen oder Extrudieren der Propylenpolymerzusammensetzung zu einem geformten oder extrudierten Gegenstand.

**15.** Zusammensetzung gemäß Anspruch 1 in Form eines geformten oder extrudierten Gegenstands.

**16.** Geformter oder extrudierter Gegenstand gemäß Anspruch 15, ausgewählt aus einem Fahrzeugstoßfängerträger, einer Fahrzeugstoßfängerverkleidung, einem Fahrzeugholm, einem Fahrzeug-Armaturenbrett, einem Gehäuse für elektrische Vorrichtungen, einer Abdeckung für elektrische Vorrichtungen, einem Gehäuse für Haushaltsgeräte, einem Kühlschrankbehälter, einer Kiste oder Rasen- und Gartenmöbel.

**Revendications**

**1.** Composition de polymère de propylène comprenant :

(a) d'environ 40 à environ 95 parties d'un polymère de propylène dans lequel le polymère de propylène est un homopolymère de propylène, un copolymère de propylène et une alpha-oléfine en $C_2$ ou $C_4$ à $C_{20}$, ou les mélanges de ceux-ci ;
(b) d'environ 1 à environ 20 parties en poids d'un élastomère de polyoléfine dans lequel l'élastomère de polyoléfine est un polymère d'éthylène sensiblement linéaire, un polymère d'éthylène linéaire ou les combinaisons de ceux-ci, dans lequel le polymère d'éthylène sensiblement linéaire et le polymère d'éthylène linéaire sont caractérisés comme ayant :

(i) une densité de moins d'environ 0,93 g/cm$^3$,
(ii) une distribution de poids moléculaire, $M_w/M_n$, de moins d'environ 3,0, et
(iii) un indice de distribution des ramifications de la composition supérieur à 30 pourcent ;

(c) d'environ 0,01 à environ 5 parties en poids d'un fluoropolymère formant des fibrilles, et
(d) de 0 à environ 25 parties d'une charge,

dans laquelle les parties sont des parties en poids sur la base du poids total de la composition de polymère de propylène.

**2.** Composition selon la revendication 1, dans laquelle le polymère d'éthylène sensiblement linéaire ou le polymère d'éthylène linéaire est un copolymère d'éthylène avec une alpha-oléfine en $C_3$ à $C_{20}$.

**3.** Composition selon la revendication 1, dans laquelle le polymère d'éthylène sensiblement linéaire ou le polymère d'éthylène linéaire est un copolymère d'éthylène avec du propylène, 1-butène, 1-hexène, 4-méthyl-1-pentane ou 1-octène.

**4.** Composition de polymère de propylène selon la revendication 1, dans laquelle le fluoropolymère est présent dans une quantité de 0,1 à 1 partie en poids.

**5.** Composition de polymère de propylène selon la revendication 1, dans laquelle la charge est présente dans une quantité de 1 à 20 parties en poids.

**6.** Composition selon la revendication 5, dans laquelle la charge est le talc, la wollastonite, l'argile, des monocouches d'un matériau de silicate stratifié échangeur de cation ou les mélanges de ceux-ci.

**7.** Composition selon la revendication 6, dans laquelle la charge est le talc.

**8.** Composition de polymère de propylène selon la revendication 1 comprenant en outre (e) d'environ 1 partie à environ 20 parties d'un polymère supplémentaire choisi parmi un polyéthylène basse densité, un polyéthylène basse densité linéaire, un polyéthylène haute densité, un polystyrène, un polycyclohexyléthane, un polyester, un interpolymère d'éthylène/styrène, un polypropylène syndiotactique, un polystyrène syndiotactique, un copolymère d'éthylène/propylène, un terpolymère d'éthylène/propylène/diène, ou les mélanges de ceux-ci.

**9.** Composition de polymère de propylène selon la revendication 1, comprenant en outre (e) d'environ 1 partie à environ 10 parties d'un polyéthylène haute densité.

**10.** Composition de polymère de propylène selon la revendication 1, comprenant en outre (e) d'environ 1 partie à environ 10 parties d'un polyéthylène basse densité linéaire.

**11.** Polymère de propylène selon la revendication 1, comprenant en outre de 0,1 à 1 partie de (f) un agent glissant choisi parmi l'érucamide, l'oléamide, le linoléamide, ou le stéramide.

**12.** Composition de polymère de propylène selon la revendication 1, comprenant en outre un(des) pigment(s), un agent anti-UV, ou des combinaisons de ceux-ci.

**13.** Procédé pour préparer une composition de polymère de propylène comprenant les étapes de combinaison :

(a) d'environ 40 à environ 95 parties d'un polymère de propylène dans lequel le polymère de propylène est un homopolymère de propylène, un copolymère de propylène et une alpha-oléfine en $C_2$ ou $C_4$ à $C_{20}$, ou les mélanges de ceux-ci ;
(b) d'environ 1 à environ 20 parties en poids d'un élastomère de polyoléfine dans lequel l'élastomère de polyoléfine est un polymère d'éthylène sensiblement linéaire, un polymère d'éthylène linéaire ou les combinaisons de ceux-ci, dans lequel le polymère d'éthylène sensiblement linéaire et le polymère d'éthylène linéaire sont caractérisés comme ayant :

(i) une densité de moins d'environ 0,93 $g/_{cm}3$,
(ii) une distribution de poids moléculaire, $M_w/M_n$, de moins d'environ 3,0, et
(iii) un indice de distribution des ramifications de la composition supérieur à 30 pourcent ;

(c) d'environ 0,01 à environ 5 parties en poids d'un fluoropolymère formant des fibrilles, et
(d) de 0 à 25 parties d'une charge,

dans laquelle les parties sont des parties en poids sur la base du poids total de la composition de polymère de propylène.

**14.** Procédé pour produire un article moulé ou extrudé d'une composition de polymère de propylène comprenant les étapes de :

(A) préparation d'une composition de polymère de propylène comprenant :

(a) d'environ 40 à environ 95 parties d'un polymère de propylène dans lequel le polymère de propylène est un homopolymère de propylène, un copolymère de propylène et une alpha-oléfine en $C_2$ ou $C_4$ à $C_{20}$, ou les mélanges de ceux-ci ;
(b) d'environ 1 à environ 20 parties en poids d'un élastomère de polyoléfine dans lequel l'élastomère de polyoléfine est un polymère d'éthylène sensiblement linéaire, un polymère d'éthylène linéaire ou les combinaisons de ceux-ci, dans lequel le polymère d'éthylène sensiblement linéaire et le polymère d'éthylène linéaire sont caractérisés comme ayant :

(i) une densité de moins d'environ 0,93 g/cm$^3$,
(ii) une distribution de poids moléculaire, $M_w/M_n$, de moins d'environ 3,0, et
(iii) un indice de distribution des ramifications de la composition supérieur à 30 pourcent ;

(c) d'environ 0,01 à environ 5 parties en poids d'un fluoropolymère formant des fibrilles, et
(d) de 0 à 25 parties d'une charge,

dans laquelle les parties sont des parties en poids sur la base du poids total de la composition de polymère de propylène et
(B) le moulage ou l'extrusion de ladite composition de polymère de propylène en un article moulé ou extrudé.

**15.** Composition selon la revendication 1 sous la forme d'un article moulé ou extrudé.

**16.** Article moulé ou extrudé selon la revendication 15 choisi parmi une poutre de pare-chocs d'automobile, un pare-chocs d'automobile, un montant d'automobile, un tableau de bord d'automobile, un boîtier de dispositif d'équipement électrique, un couvercle de dispositif d'équipement électrique, un boîtier d'appareil, un conteneur congélateur, une caisse, ou du mobilier pour pelouse et jardin.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5468808 A
- US P3236917 A
- US P5194509 A
- US P4905541 A
- US P5272236 A
- US P5278272 A
- US P3645992 A
- US P4937299 A
- US P4701432 A
- US P4937301 A
- US P4935397 A
- US P5055438 A
- EP 129368 A
- EP 260999 A
- WO 9007526 A
- US P4798081 A
- US P3005795 A
- US 3142665 A
- US 3671487 A
- US 4016345 A
- US 4463130 A
- US P5091461 A
- US 3424703 A
- EP 639613 A1
- EP 391413 A

### Non-patent literature cited in the description

- *Modern Plastics Encyclopedia/89,* 1988, vol. 65 (11), 86-92
- **FUJIMOTO, T. NISHI ; R. KADO.** *Polymer Journal,* 1972, vol. 3, 448-462
- **B. WUNDERLICH.** Macromolecular Physics, Volume 3, Crystal Melting. Academic Press, 1980, vol. 3, 48, 165
- **WILD.** Journal of Polymer Science. 1982, vol. 20, 441